# EUROPEAN PATENT APPLICATION

(11) **EP 3 594 761 A1**
(43) Date of publication of application: **15.01.2020**
(21) Application number: 19185090.8
(22) Date of filing: 09.07.2019
(51) Int. Cl.: G05B 19/042

(54) **FIELD INSTRUMENT AND INSTRUMENT CONTROL METHOD**

(30) Priority: 10.07.2018 JP 2018130597
(71) Applicant: Yokogawa Electric Corporation, Musashino-shi Tokyo 180-8750 (JP)
(72) Inventor: ARAI, Takashi, Musashino-shi Tokyo 180-8750 (JP); YOSHIDA, Yusaku, Musashino-shi Tokyo 180-8750 (JP); SATO, Shuichi, Musashino-shi Tokyo 180-8750 (JP); URABE, Hiroo, Musashino-shi Tokyo 180-8750 (JP)
(74) Representative: Osha Liang

(57) **Abstract**

A field instrument includes: a plurality of sensors; a converter that acquires measurement results of the sensors and converts the measurement results into measurement information. The measurement information is physical quantities; and a processor that outputs, to a control target instrument connected to the field instrument, a control instruction that controls the control target instrument based on the measurement information.

## Description

### Cross-Reference to Related Application

This application is based on and claims priority under 35 U.S.C. § 119 from Japanese Patent Application No. 2018-130597 filed on July 10, 2018, the contents of which are incorporated herein by reference.

### Background

### Technical Field

The present invention relates to a field instrument and an instrument control method.

### Description of Related Art

Conventionally, at plants, factories, and the like, wayside devices called field instruments (measuring instruments, operating instruments) are used. Field instruments perform, for example, measurement of a measurement target (for example, a fluid or the like) and sending of measurement values (for example, a flow rate, a pressure, a temperature, and the like) to an external instrument. The external instrument then performs abnormality diagnosis or the like based on the measurement values received from the field instruments (for example, see patent literature 1).

In a situation of performing measurement by various types of wayside devices in a conventional measuring system, each wayside device needs to be wired with a transmission line for sending the measurement value measured by the wayside device. In this manner, in a conventional measuring system, a cost of wiring work is increased due to each wayside device needing to be wired with a transmission line.

For this reason, conventionally, a field instrument is proposed that is provided with various types of wayside devices and a server function. By being integrally provided with various types of wayside devices and being further provided with a server function, one such field instrument can record various measurement values. This enables a cost of wiring work to be reduced because each wayside device does not need to be wired with a transmission line.

### [Patent Literature]

[Patent Literature 1] JP 5049956 B2

However, the above field instrument provided with the various types of wayside devices only acquires data and sends a result to an external terminal device. As such, the field instrument provided with the various types of wayside devices cannot be used effectively.

### Summary

In light of the above, one or more embodiments of the present invention provide a technique that can effectively use a field instrument provided with various types of wayside devices.

One or more embodiments of the present invention provide a field instrument, provided with a plurality of types of sensors, a converter that acquires measurement results of the plurality of types of sensors and converts the measurement results into measurement information that is physical quantities, and a control unit that outputs to a connected control target instrument a control instruction for controlling an operation of the control target instrument based on the measurement information.

The above configuration outputs to the control target instrument the control instruction for controlling the operation of the control target instrument using the measurement results obtained by the various types of sensors. This enables the field instrument to control the operation of the control target instrument without being dependent on a host system. As such, it is possible to effectively use a field instrument provided with various types of measuring instruments.

One or more embodiments of the present invention provide the above field instrument, wherein the control unit controls the operation of the control target instrument by calculating an operation amount of the control target instrument using the measurement information and outputting a control instruction including the calculated operation amount to the control target instrument.

The above configuration enables the field instrument to monitor the measurement information obtained from the plurality of types of sensors and calculate a necessary operation amount of the control target instrument. The field instrument then outputs the control instruction including the calculated operation amount to the control target instrument. This enables the operation of the control target instrument to be controlled.

One or more embodiments of the present invention provide the above field instrument, further provided with a port for directly connecting to the control target instrument, wherein the field instrument and one control target instrument are connected via one signal line via the port.

By the above configuration, the field instrument outputs the control instruction to the control target instrument via a signal line that directly connects the field instrument and the control target instrument in a one-to-one connection. This enables the control target instrument to be controlled by an existing instrumentation method without a need for special instrumentation.

One or more embodiments of the present invention provide the above field instrument, further provided with an external input unit that is connectable to an external instrument that acquires a measurement value measured by an external measuring instrument that is not directly connected to the field instrument, wherein the control unit outputs a control instruction to each of a plurality of control target instruments using the measurement information and the measurement value obtained from the external instrument.

The above configuration enables the operation amount of the control target instrument to be calculated by including not only the measurement information based on measurement values measured by the sensors provided to the field instrument per se but also, for example, measurement information acquired from the external instrument. This enables the field instrument to control a control target instrument based on the operation amount obtained using the measurement information obtained from the various types of sensors and control another control target instrument based on an operation amount obtained using the measurement information obtained from the external instrument. That is, the field instrument can control a plurality of control target instruments. As such, it is possible to effectively use a field instrument provided with various types of measuring instruments.

One or more embodiments of the present invention provide an instrument control method, having an acquiring step of acquiring measurement results of a plurality of types of sensors provided to a field instrument, a converting step of converting the measurement results into measurement information that is physical quantities, and a control step of outputting to a connected control target instrument a control instruction for controlling an operation of the control target instrument based on the measurement information.

One or more embodiments of the present invention enable effective use of a field instrument provided with various types of wayside devices.

### Brief Description of Drawings

FIG. 1 is a schematic diagram illustrating a schematic configuration of a measuring system according to one or more embodiments of the present invention.
FIG. 2 is a schematic diagram illustrating a schematic configuration of a field instrument according to one or more embodiments of the present invention.
FIG. 3 is a block diagram illustrating a functional configuration of the field instrument according to one or more embodiments of the present invention.
FIG. 4 is a diagram illustrating a configuration of a signal acquisition unit according to one or more embodiments of the present invention.
FIG. 5 is a flowchart illustrating a flow of processing of the field instrument according to one or more embodiments of the present invention.
FIG. 6 is a schematic diagram illustrating a schematic configuration of a measuring system according to one or more embodiments of the present invention.
FIG. 7 is a block diagram illustrating a functional configuration of a field instrument according to one or more embodiments of the present invention.

### Detailed Description

Embodiments of the present invention are described below with reference to the drawings.

A measuring system 1 of one or more embodiments of the present invention is described below with reference to the drawings.

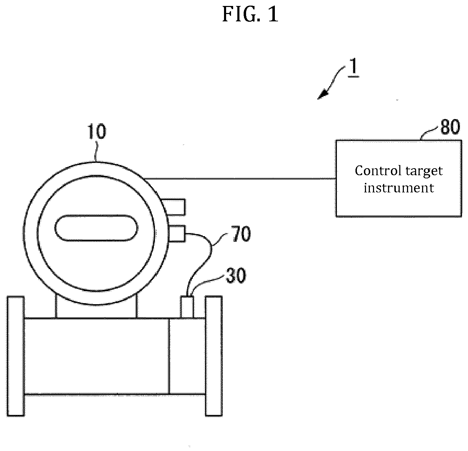

FIG. 1 is a schematic diagram illustrating a schematic configuration of the measuring system 1 according to one or more embodiments of the present invention. The measuring system 1 is provided with a field instrument 10 and a control target instrument 80. Moreover, the field instrument 10 is configured including a sensor 30 and a transmission line 70.

The field instrument 10 is a measuring instrument that performs measurement relating to a measurement target. In the present embodiment, the field instrument 10 is a measuring instrument whose main-body unit has a built-in flow-rate sensor that measures a flow rate of a fluid flowing in piping (not illustrated). The field instrument 10 is installed to piping laid down in, for example, a plant, a factory, or the like.

The sensor 30 is a sensor of a different type than the above flow-rate sensor and is, for example, a temperature sensor, a pressure sensor, a conductivity sensor, a pH sensor, or the like.

The main-body unit of the field instrument 10 and the sensor 30 are connected via the transmission line 70. Note that although in FIG. 1 the transmission line 70 is wired outside the main-body unit of the field instrument 10 and the sensor 30, the transmission line 70 is not limited thereto. The transmission line 70 may be wired inside an instrument such as the field instrument 10.

The transmission line 70 includes, for example, a transmission line used to transmit an analog signal of "4 to 20 mA," a transmission line used to transmit a pulse signal of "0 to 1 kHz," and a transmission line for sending a high signal / low signal by turning on/off a contact (not illustrated) provided inside the field instrument 10. Note that the field instrument 10 may be connected for communication over, for example, a wired industrial network conforming to HART (registered trademark), FieldBus, or the like or a wireless industrial network conforming to ISA 100.11a, Wireless HART (registered trademark), or the like.

The field instrument 10 can store measurement-result information based on a measurement value of the measured flow rate and measurement-result information based on a measurement value acquired from the sensor 30 (for example, a temperature, a pressure value, a conductivity, a pH value, or the like). Moreover, the field instrument 10 controls an operation of the control target instrument 80 by calculating an operation amount of the control target instrument 80 using the stored measurement-result information and outputting the calculated operation amount to the control target instrument 80.

The control target instrument 80 is an instrument that is installed in the plant, the factory, or the like and controlled by the field instrument 10. The control target instrument 80 is, for example, an actuator of a valve or the like, a Patlite (registered trademark), a buzzer, a gate, a pump, a heater, or the like. Note that the control target instrument 80 is not limited to the above examples and may be another instrument as long as it is an instrument that is installed in the plant, the factory, or the like and is controlled by the field instrument 10. The field instrument 10 and the control target instrument 80 are connected via a signal line that connects the field instrument 10 and the control target instrument 80 in a one-to-one connection. That is, the signal line connecting the field instrument 10 and the control target instrument 80 differs from a signal line that makes a one-to-many connection such as a bus (for example, FieldBus). The control target instrument 80 performs the operation according to the operation amount output from the field instrument 10.

For example, in a situation where the control target instrument 80 is a valve and an operation amount relating to an opening of the valve is output from the field instrument 10, the control target instrument 80 opens or closes the opening of the valve according to the operation amount. For example, in a situation where the control target instrument 80 is a Patlite and a control instruction instructing lighting of the Patlite is output from the field instrument 10, the Patlite lights a light according to the control instruction.

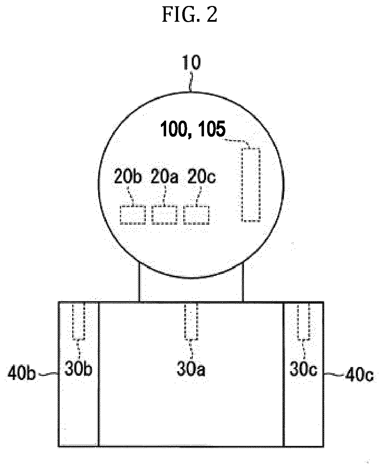

FIG. 2 is a schematic diagram illustrating a schematic configuration of the field instrument according to one or more embodiments of the present invention. The field instrument 10 is provided with a converter 20 provided with one or more converters (20a, 20b, and 20c), the sensor 30 (30a, 30b, and 30c), a sensor installation unit 40 (40b and 40c), and a server board 100.

The converter 20 is configured by a board having a function of converting the measurement value measured by the sensor 30 into the measurement-result information, which is a physical quantity. The converter 20 has a function of, for example, an A/D (analog/digital) converter. Note that the converter 20 may be of a configuration where a plurality of A/D converters respectively corresponding to each converter 20a, 20b, and 20c is provided on one board or a configuration where one A/D converter corresponding to the converters 20a, 20b, and 20c is provided on one board.

Furthermore, the converter 20 may be configured from an A/D converter and a processor (computing device) and compute and convert an output value of the A/D converter into the measurement-result information that is the physical quantity in the processor. In this situation, the configuration may be one where a plurality of processors respectively corresponding to each converter 20a, 20b, and 20c is provided or one where one processor corresponding to the converters 20a, 20b, and 20c) is provided.

The sensor 30 (30a, 30b, and 30c) is various types of sensors that measure the fluid flowing in the piping (not illustrated), which is the measurement target. The three sensors 30 illustrated in FIG. 2 are respectively a flow-rate sensor 30a, a temperature sensor 30b, and a pressure sensor 30c. Measurement values measured by the flow-rate sensor 30a, the temperature sensor 30b, and the pressure sensor 30c are respectively converted by the converter 20a, the converter 20b, and the converter 20c into the measurement-result information that is physical quantities.

The sensor installation unit 40b and the sensor installation unit 40c are members for respectively installing the sensor 30b and the sensor 30c to the main-body unit of the field instrument 10. Note that the sensor installation unit 40 does not have to be a member provided exclusively to install the sensor 30. For example, various types of sensors 30 may be installed to a ground ring or the like connected to a main-body unit of a flow meter.

The server board 100 is an electronic circuit board (motherboard) that is provided with a CPU (central processing unit) and has a function of controlling the control target instrument 80. The server board 100 stores the measurement-result information converted by the converter 20. The server board 100 controls the operation of the control target instrument 80 by calculating the operation amount of the control target instrument 80 using the stored measurement-result information and outputting the calculated operation amount to the control target instrument 80.

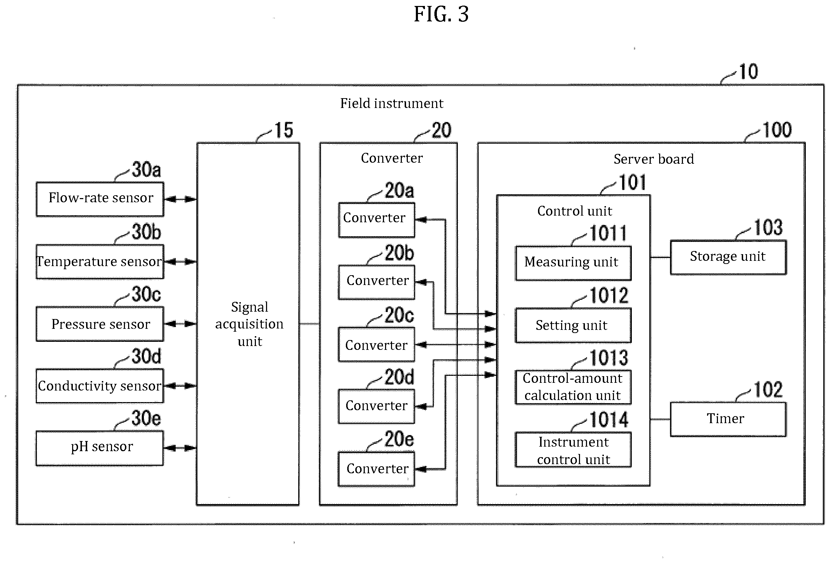

FIG. 3 is a block diagram illustrating a functional configuration of the field instrument according to one or more embodiments of the present invention. The field instrument 10 is provided with a signal acquisition unit 15, the converter 20 (20a, 20b, 20c, 20d, and 20e), the server board 100, the flow-rate sensor 30a, the temperature sensor 30b, the pressure sensor 30c, a conductivity sensor 30d, and a pH sensor 30e. Moreover, the server board 100 is configured including a control unit 101, a timer 102, and a storage unit 103. Moreover, the control unit 101 is configured including a measuring unit 1011, a setting unit 1012, a control-amount calculation unit 1013, and an instrument control unit 1014.

The control unit 101 is configured using a processor such as a CPU and a memory. The control unit 101 functions as the measuring unit 1011, the setting unit 1012, the control-amount calculation unit 1103, and the instrument control unit 1014 by executing a program.

The measuring unit 1011 operates periodically (for example, every "50 msec") based on a signal from the timer 102 and acquires measurement-result information based on measurement values measured by the various types of sensors 30 (the flow-rate sensor 30a, the temperature sensor 30b, the pressure sensor 30c, the conductivity sensor 30d, and the pH sensor 30e) from the converter 20 (20a, 20b, 20c, 20d, and 20e). Then, the measuring unit 1011 causes the storage unit 103 to store the acquired measurement-result information. Note that the measuring unit 1011 may be of a configuration that simultaneously acquires measurement results of a plurality of types of sensors based on the signal from the timer 102.

The setting unit 1012 performs processing relating to various types of settings necessary for the various types of sensors 30 (the flow-rate sensor 30a, the temperature sensor 30b, the pressure sensor 30c, the conductivity sensor 30d, and the pH sensor 30e) to measure the measurement target (the fluid)-for example, setting a parameter for measurement, updating firmware, and the like.

The control-amount calculation unit 1013 calculates the operation amount for controlling the control target instrument 80 using the measurement-result information stored in the storage unit 103.

The instrument control unit 1014 controls the operation of the control target instrument 80 by outputting to the control target instrument 80 a control instruction including the operation amount calculated by the control-amount calculation unit 1013. The operation control of the control target instrument 80 performed by the instrument control unit 1014 is, for example, turning a rotating warning light on or off, turning a buzzer on or off, opening or closing a gate, opening or closing a valve, rotating a pump, turning a heater on or off, or the like.

The signal acquisition unit 15 acquires the measurement values obtained from the sensor 30 (the flow-rate sensor 30a, the temperature sensor 30b, the pressure sensor 30c, the conductivity sensor 30d, and the pH sensor 30e). The signal acquisition unit 15 is, for example, provided with terminals for interfaces of a large number of formats for acquiring signals including the measurement values output by the sensor 30. The signals acquired by the signal acquisition unit 21 are typically electrical signals. The signal acquisition unit 15 supplies the acquired signals to the converter 20 via a signal line between the signal acquisition unit 15 and the converter 20.

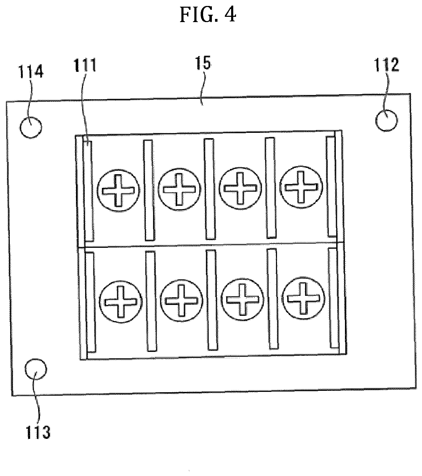

The signal acquisition unit 15 is configured using a board such as that illustrated in FIG. 4. FIG. 4 is a diagram illustrating a configuration of the signal acquisition unit 15 according to one or more embodiments. As illustrated in FIG. 4, a terminal block 111 is disposed on an upper face (surface) of the board configuring the signal acquisition unit 15. The terminal block 111 is provided with a total of eight terminals in a 2×4 (vertical×horizontal) configuration. Each of these eight terminals is made of metal and is provided with a screw. A signal line can be connected to each terminal. Note that the terminal block 111 itself is made of synthetic resin.

The signal acquisition unit 15, the converter 20, and the server board 100 are configured as a control device that controls the control target instrument 80. The control device is configured by stacking three boards in layers. These three boards are, starting from the top, the board configuring the signal acquisition unit 15 ("signal acquisition board"), the board configuring the converter 20 ("signal conversion board"), and the server board 100. That is, these boards are stacked in the above order. Each bolt 112, 113, and 114 penetrates the signal acquisition board, the signal conversion board, and the server board 100.

Furthermore, the server board 100 is provided with a port 105 (such as a connector) for connecting directly to the control target instrument 80. This directly connects the field instrument and the control target instrument 80 in the one-to-one connection.

The converter 20 has a function of any one among the converter 20a, the converter 20b, the converter 20c, the converter 20d, and the converter 20e. The converter 20a acquires the measurement value measured by the flow-rate sensor 30a provided by the field instrument 10 from the flow-rate sensor 30a. Then, the converter 20a converts the acquired measurement value into the measurement-result information that is the physical quantity and outputs this to the server board 100.

Likewise, the converter 20b, the converter 20c, the converter 20d, and the converter 20e respectively acquire from each sensor 30 the measurement values measured by each of their sensors 30 provided by the field instrument 10 (the temperature sensor 30b, the pressure sensor 30c, the conductivity sensor 30d, and the pH sensor 30e). Then, the converter 20b, the converter 20c, the converter 20d, and the converter 20e each convert the acquired measurement value into the measurement-result information that is the physical quantity and respectively output this to the server board 100.

The flow-rate sensor 30a measures the flow rate of the fluid (measurement target) flowing in the piping (not illustrated) and outputs the measurement value that is the measured result to the converter 20 via the signal acquisition unit 15.

Likewise, the temperature sensor 30b, the pressure sensor 30c, the conductivity sensor 30d, and the pH sensor 30e respectively measure a temperature, a pressure, a conductivity, and a pH value of the fluid (measurement target) flowing in the piping (not illustrated) and output the measurement values that are the measured results to the converter 20 via the signal acquisition unit 15.

Note that in the present embodiment, the converter 20 (20a, 20b, 20c, 20d, and 20e) that converts the measurement values measured by the various types of sensors 30 (the flow-rate sensor 30a, the temperature sensor 30b, the pressure sensor 30c, the conductivity sensor 30d, and the pH sensor 30e) installed in the field instrument 10 into the measurement-result information that is the physical quantities is provided by the main-body unit of the field instrument 10. However, the converter 20 is not limited thereto. The converter 20 (20a, 20b, 20c, 20d, and 20e) may be of a configuration of, for example, being provided by each sensor 30 (the flow-rate sensor 30a, the temperature sensor 30b, the pressure sensor 30c, the conductivity sensor 30d, and the pH sensor 30e).

The timer 102 periodically operates the measuring unit 1011 by periodically (for example, every "50 msec") generating a signal and outputting this signal to the measuring unit 1011. Moreover, the timer 102 can keep a current time.

The storage unit 103 stores the measurement-result information acquired by the measuring unit 1011. The storage unit 103 is configured using a storage device such as a magnetic hard disk device or a semiconductor storage device.

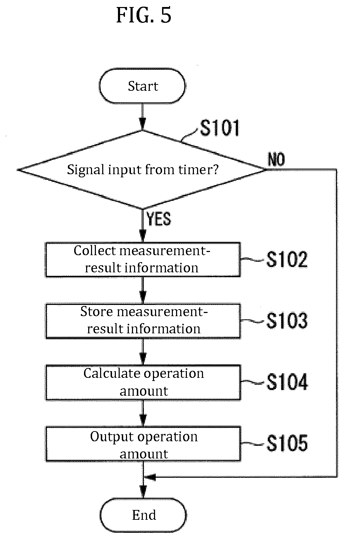

FIG. 5 is a flowchart illustrating a flow of processing of the field instrument 10 according to one or more embodiments of the present invention.

The measuring unit 1011 determines whether input of the signal periodically output from the timer 102 is sensed (step S101). In a situation where no input of the signal periodically output from the timer 102 is sensed (step S101-NO), the measuring unit 1011 ends processing at step S101.

Meanwhile, in a situation where input of the signal periodically output from the timer 102 is sensed (step S101-YES), the measuring unit 1011 collects from the converter 20 the measurement-result information based on the measurement values measured by the various types of sensors 30 (step SI02).

The measuring unit 1011 causes the storage unit 103 to store the acquired measurement-result information (step S103). The control-amount calculation unit 1013 calculates the operation amount for controlling the control target instrument 80 using the measurement-result information stored in the storage unit 103 (step S104). The instrument control unit 1014 controls the operation of the control target instrument 80 by outputting to the control target instrument 80 the control instruction including the operation amount calculated by the control-amount calculation unit 1013 (step S105).

According to the field instrument 10 configured as above, the operation amount of the control target instrument 80 is calculated using the measurement values obtained by the various types of sensors 30 and the calculated operation amount is output to the control target instrument 80 as the control instruction. This enables the field instrument 10 to control the operation of the control target instrument 80 without being dependent on a host system. As such, it is possible to effectively use a field instrument provided with various types of measuring instruments.

Furthermore, conventionally, an actuator can be controlled by using a FieldBus FF (FOUNDATION [registered trademark] FieldBus) function. However, this art requires special instrumentation of a FieldBus. In contrast, the field instrument 10 in one or more embodiments of the present invention outputs the control instruction to the control target instrument 80 via an existing signal line that directly connects the field instrument 10 and the control target instrument 80 in a one-to-one connection. This enables the control target instrument 80 to be controlled by an existing instrumentation method without a need for special instrumentation.

### <Variation>

Although the present embodiment illustrates a configuration where the measuring unit 1011 acquires the measurement-result information from the converter 20 in a situation where the signal output from the timer 102 is input, the measuring unit 1011 may be configured to acquire the measurement-result information at another timing. This other timing is a timing when an instruction is input and may be, for example, a timing when an instruction from an external device is input.

A field instrument 10a of one or more embodiments of the present invention is described below with reference to the drawings. Note that in the second embodiment, functions similar to the first embodiment are labeled with similar reference signs as the first embodiment and description of these functions is omitted.

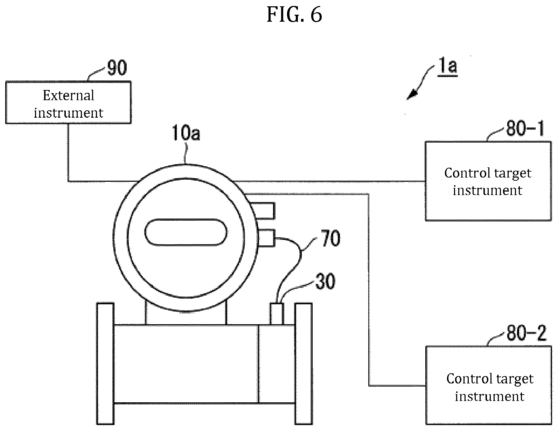

FIG. 6 is a schematic diagram illustrating a schematic configuration of a measuring system 1a according to one or more embodiments of the present invention. The measuring system 1a is provided with the field instrument 10a, a plurality of control target instruments 80 (80-1 and 80-2), and an external instrument 90.

The external instrument 90 is an instrument that acquires a measurement value measured by an external measuring instrument (for example, an external sensor) not directly connected to the field instrument 10a. The external instrument 90 outputs measurement-result information based on the acquired measurement value to the field instrument 10a.

The field instrument 10a is a measuring instrument that performs measurement relating to the measurement target. The field instrument 10a differs from the field instrument 10 in that the former controls the control target instrument 80 using the measurement-result information input from the external instrument 90. The field instrument 10a is otherwise configured similarly to the field instrument 10.

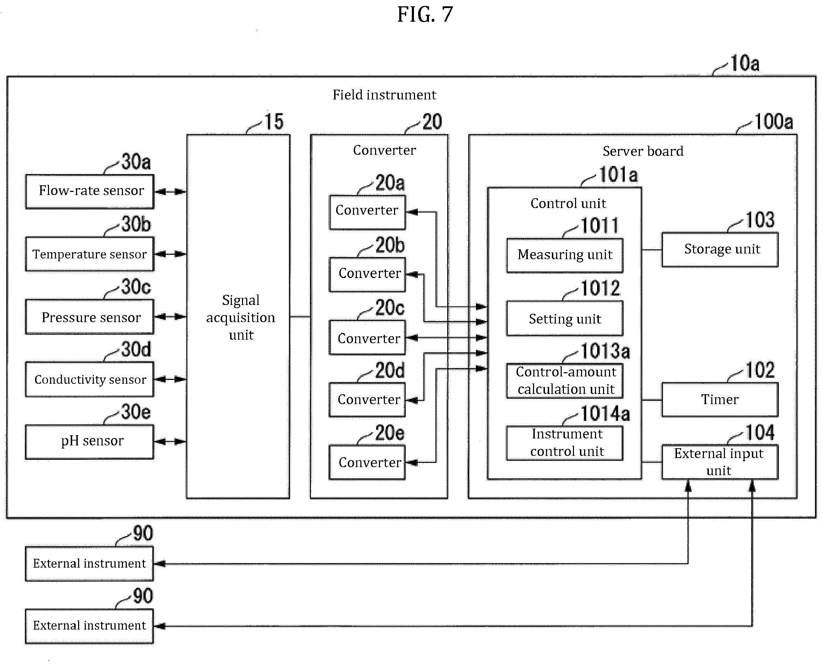

FIG. 7 is a block diagram illustrating a functional configuration of the field instrument 10a according to one or more embodiments of the present invention. Note that functional blocks whose configurations are identical to the functional blocks in the field instrument 10 of the first embodiment are labeled with the same reference signs and description thereof is omitted.

The field instrument 10a is provided with the signal acquisition unit 15, the converter 20 (20a, 20b, 20c, 20d, and 20e), a server board 100a, the flow-rate sensor 30a, the temperature sensor 30b, the pressure sensor 30c, the conductivity sensor 30d, and the pH sensor 30e. Moreover, the server board 100a is configured including a control unit 101a, the timer 102, the storage unit 103, and an external input unit 104. Moreover, the control unit 101a is configured including the measuring unit 1011, the setting unit 1012, a control-amount calculation unit 1013a, and an instrument control unit 1014a.

A configuration of the field instrument 10a differs from the field instrument 10 in being provided with the control-amount calculation unit 1013a and the instrument control unit 1014a instead of the control-amount calculation unit 1013 and the instrument control unit 1014 and being newly provided with the external input unit 104. It is otherwise configured similarly to the field instrument 10. As such, only the differences are described.

The external input unit 104 acquires the measurement-result information based on the measurement value output from one external instrument 90 or a plurality of external instruments 90. The external input unit 104 is a communication interface for connecting to the external instrument 90 for communication.

The control unit 101a causes the storage unit 103 to store the measurement-result information acquired by the external input unit 104.

The control-amount calculation unit 1013a calculates the operation amount for controlling the control target instrument 80 using the measurement-result information stored in the storage unit 103. More specifically, the control-amount calculation unit 1013a calculates the operation amount for controlling the control target instrument 80 using the measurement-result information obtained from the various types of sensors 30 stored in the storage unit 103. Moreover, the control-amount calculation unit 1013a calculates the operation amount for controlling the control target instrument 80 using the measurement-result information obtained from the external instrument 90 stored in the storage unit 103.

The instrument control unit 1014a controls the operation of the control target instrument 80 by outputting to the control target instrument 80 a control instruction including the operation amount calculated by the control-amount calculation unit 1013a. Specifically, the instrument control unit 1014a outputs to the control target instrument 80-1 a control instruction including the operation amount calculated using the measurement-result information obtained from the various types of sensors 30 and outputs to the control target instrument 80-2 a control instruction including the operation amount calculated using the measurement-result information obtained from the external instrument 90. The instrument control unit 1014a thereby controls operations of the plurality of control target instruments 80.

As above, according to the field instrument 10a of one or more embodiments of the present invention, the operation amount of the control target instrument 80 can be calculated by including not only the measurement-result information based on the measurement values measured by the sensors 30 (the flow-rate sensor 30a, the temperature sensor 30b, the pressure sensor 30c, the conductivity sensor 30d, and the pH sensor 30e) provided in the field instrument 10a per se but also, for example, measurement-result information acquired from various types of external instruments 90. This enables the field instrument 10a to control the control target instrument 80-1 based on the operation amount obtained using the measurement-result information obtained from the various types of sensors 30 and control the control target instrument 80-2 based on the operation amount obtained using the measurement-result information obtained from the external instrument 90. That is, the field instrument 10a can control a plurality of control target instruments 80. As such, it is possible to effectively use a field instrument provided with various types of measuring instruments.

Furthermore, by controlling the plurality of control target instruments 80, the field instrument 10a can monitor and control the operations of each control target instrument 80. This enables closed-loop control of the plurality of control target instruments 80 without being dependent on a host system.

### <Variation>

The control-amount calculation unit 1013a may calculate the operation amount for controlling the control target instrument 80 using the measurement-result information obtained from the various types of sensors 30 and the measurement-result information obtained from the external instrument 90 stored in the storage unit 103.

Although the disclosure has been described with respect to only a limited number of embodiments, those skilled in the art, having benefit of this disclosure, will appreciate that various other embodiments may be devised without departing from the scope of the present invention. Accordingly, the scope of the invention should be limited only by the attached claims.

### Reference Signs List

1, 1a ... measuring system; 10, 10a ... field instrument; 15 ... signal acquisition unit 15; 20, 20a, 20b, 20c, 20d, 20e ... converter; 30 ... sensor; 30a ... flow-rate sensor; 30b ... temperature sensor; 30c ..., pressure sensor; 30d ... conductivity sensor; 30e ... pH sensor; 80 ... control target instrument; 90 ... external instrument; 100, 100a ... server board; 101, 101a ... control unit; 102 ... timer; 103 ... storage unit; 104 ... external input unit; 1011 ... measuring unit; 1012 ... setting unit; 1013, 1013a ... control-amount calculation unit; 1014, 1014a ... instrument control unit

## Claims

1. A field instrument comprising:
a plurality of sensors;
a converter that acquires measurement results of the sensors and converts the measurement results into measurement information, wherein the measurement information is physical quantities; and
a processor that outputs, to a control target instrument connected to the field instrument, a control instruction that controls the control target instrument based on the measurement information.

2. The field instrument of claim 1, wherein the processor controls the control target instrument by:
calculating an operation amount of the control target instrument using the measurement information, and
outputting, to the control target instrument, the control instruction including the calculated operation amount.

3. The field instrument of claim 1 or claim 2, further comprising:
a port that directly connects the field instrument to the control target instrument; wherein
the field instrument and the control target instrument are connected with a signal line in a one-to-one connection.

4. The field instrument of any of claims 1-3, further comprising:
a communication interface that connects to an external instrument that acquires a measurement value measured by an external measuring instrument that is not directly connected to the field instrument; wherein
the processor outputs the control instruction to each of a plurality of control target instruments using the measurement information and the measurement value.

5. An instrument control method comprising:
acquiring measurement results from a plurality of sensors of a field instrument;
converting the measurement results into measurement information, wherein the measurement information is physical quantities; and
outputting, to a control target instrument connected to the field instrument, a control instruction that controls the control target instrument based on the measurement information.
